# EUROPEAN PATENT APPLICATION

(11) **EP 2 789 230 A1**
(43) Date of publication of application: **15.10.2014**
(21) Application number: 14161367.9
(22) Date of filing: 24.03.2014
(51) Int. Cl.: A01K 97/04

(54) **Ball maker**

(30) Priority: 08.04.2013 GB 201306246
(71) Applicant: Catchum 88 Limited, Hockley, Essex SS5 5LR (GB)
(72) Inventor: Nash, Kevin, Hockley, Essex SS5 5LR (GB)
(74) Representative: Harrison IP Limited

(57) **Abstract**

A ball maker, suitable for compressing a bait mixture to form bait balls, comprises two mould parts (12, 10) movable relative to one another. The mould parts can be separated to bait mixture to be loaded into one of the mould parts. The parts may then be mated with one another to contain the loaded bait and as they are moved to their closed position they compress the bait to form a bait ball (22). In the invention, at least one axially extending slot (30, 32) is provided in at least one of the mould parts, to enable part of an elongate object (34) to be embedded within a compressed ball and the remainder of the object to project laterally from the mould cavity through a said slot, the elongate object being removable from the mould cavity with the compressed ball by sliding axially along the slot after the mould parts have been separated.

## Description

### Field of the invention

The present invention relates to a ball maker for moulding a mixture into a ball. The ball maker is intended for use by anglers in making bait balls.

### Background of the invention

Anglers often roll a bait mixture into balls, either for casting as ground bait or for attachment to a fishing line. This operation is normally performed by hand but can be somewhat messy and the resulting bait balls are often inconsistent in size and density.

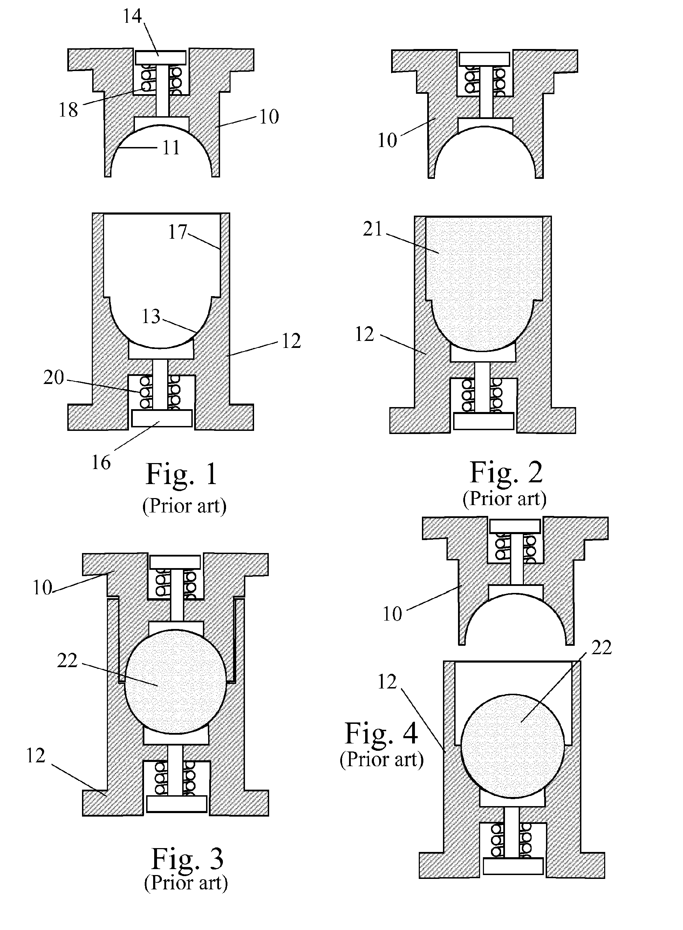

To overcome these problems, it is known to use a ball maker as shown in Figures 1 to 5 the accompanying drawings. The known ball maker comprises two separable mould parts 10 and 12. The first mould part 10 defines one half 11 of the mould cavity while the second mould part 12, in addition to defining the second half 13 of the mould cavity, has a tubular section 17 for receiving and guiding the first part 10. Each of the two parts 10 and 12 incorporates an optional respective ejector button 14, 16 which may be biased by means of an optional spring 18, 20.

Starting with the two halves 10 and 12 separated, in the manner shown in Figure 1, the second part 12 is filled with bait mixture 21 as shown in Figure 2. This can be carried out by scooping the bait out of a container using the mould part 12, then levelling it using a knife or spatula. In this way, a preset volume of bait mixture 21 is loaded into the mould part 12 without the angler soiling his hands. Next, the two parts 10 and 12 of the mould are pushed together in the manner shown in Figure 3, to compress the loose bait mixture 21 into a bait ball 22. The compressed bait ball 22 retains its shape when the mould parts are separated, as shown in Figure 4.

If desired, the degree of compression of the bait can be reduced by not filling the mould part 12 to the brim or increased by heaping the bait onto the mould part 12, either of which may be readily accomplished using a spoon.

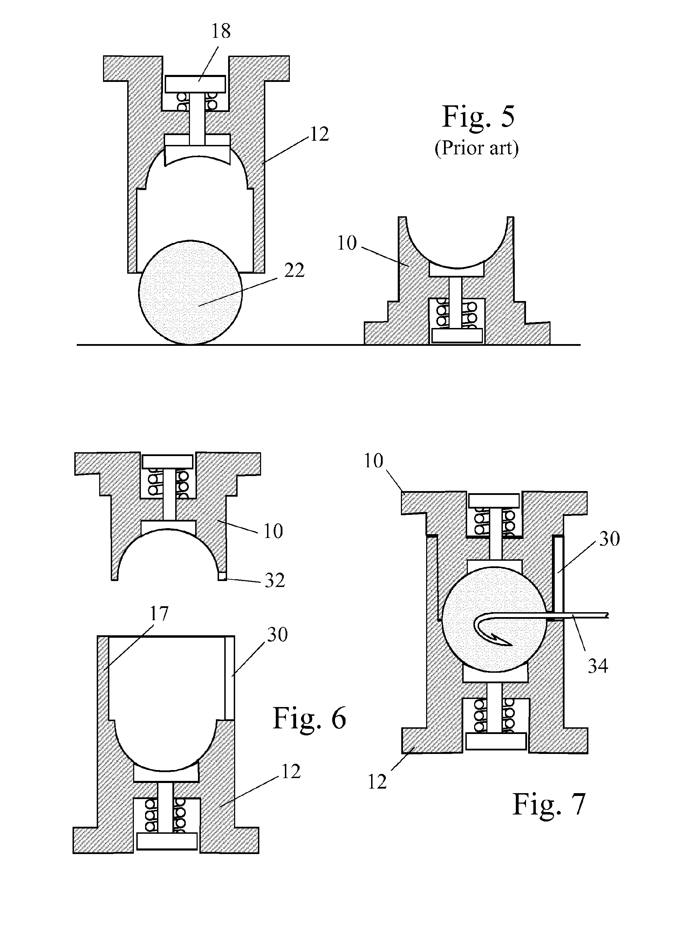

On separating the two parts 12 and 10, the bait ball 22 will adhere to one of the parts more strongly that to the other. The mould part 12 or 10 containing the bait ball 22 is then tipped upside down as shown in Figure 5 and the ejector button 16 or 18 is depressed manually to eject the formed bait ball 22.

### Summary of the invention

According to the present invention, there is provided a ball maker comprising two mould parts movable relative to one another from an open position for enabling a mixture to be loaded into one of the mould parts, by way of an intermediate position in which the loaded mixture is trapped between the two mould parts, to a fully closed position in which the loaded mixture is compressed into a ball within a mould cavity defined between the two mould parts, characterised in that at least one axially extending slot is provided in at least one of the mould parts, to enable part of an elongate object to be embedded within a compressed ball and the remainder of the object to project laterally from the mould cavity through a said slot, the elongate object being removable from the mould cavity with the compressed ball by sliding axially along the slot after the mould parts have been separated.

In some embodiments of the invention, the first mould part defines a first half of a cavity and the second mould part defines the second half of the cavity and has a tubular section for receiving and guiding the first part, at least one slot being formed in at least the tubular section of the second mould part.

### Brief description of the drawings

The invention will now be described further, by way of example, with reference to the accompanying drawings, in which:
Figures 1 to 5 are, as previously described, sections through a known ball maker,
Figure 6 is a section similar to that of Figure 1 of a ball maker embodying the present invention, and
Figure 7 is a section similar to that of Figure 3 of the embodiment of the invention shown in Figure 6 when used to conceal a hook with in a compressed ball.

### Detailed description of an embodiment of the invention

The ball maker shown in Figures 6 and 7 includes all the components described with reference to Figures 1 to 5, and additionally comprises a slot 30 formed in the tubular section 17 of the second part 12 of the mould. The slot 30 may alternatively be made slightly longer to extend partly into the mould cavity. If desired a second small slot 32 may be formed in the first mould part 10, but the latter slot is not essential. The purpose of the slots 30 and 32 is to allow a hook 34 or a line to be embedded within the bait ball 22 as shown in Figure 7 and to allow the bait ball to be removed from the mould with the hook 34 in place.

If a line is desired to pass through the bait ball 22, then two circumferentially spaced slots may be provided instead of the single illustrated slot 30.

The use of the mould of the invention is essentially the same as described by reference to Figures 1 to 5, save that a hook 34 or a section of line is passed into the mould cavity through the slot 30 before the bait mixture is compressed. Furthermore, as the attached hook or line may now be used to remove the bait ball from the mould, it is possible to dispense with the ejector buttons. The ejector buttons are retained in the embodiment shown in Figures 6 and 7 only to assist in removal of the bait ball when no hook or line is to be embedded within it.

## Claims

1. A ball maker for moulding a mixture into a ball, comprising two mould parts (10,12) movable relative to one another from an open position for enabling a mixture (21) to be loaded into one of the mould parts, by way of an intermediate position in which the loaded mixture is trapped between the two mould parts, to a fully closed position in which the loaded mixture (21) is compressed into a ball (22) within a mould cavity defined between the two mould parts, **characterised in that** at least one axially extending slot (30) is provided in at least one of the mould parts (12), to enable part of an elongate object (34) to be embedded within a compressed ball (22) and the remainder of the object to project laterally from the mould cavity through a said slot, the elongate object being removable from the mould cavity with the compressed ball (22) by sliding axially along the slot (30) after the mould parts (10,12) have been separated.

2. A ball maker as claimed in claim 1, wherein the first mould part (10) defines a first half (11) of a cavity and the second mould part (12) defines the second half (13) of the cavity and has a tubular section (17) for receiving and guiding the first part and wherein at least one slot (30) is formed in at least the tubular section (17) of the second mould part (12).

3. A ball maker as claimed in claim 1 or claim 2, wherein at least one of the mould parts (10,12) includes an ejector button (14,16) to assist in separating a compressed ball (22) from the mould cavity.
